# EUROPEAN PATENT SPECIFICATION

(11) **EP 3 907 577 B1**
(45) Date of publication and mention of the grant of the patent: **18.11.2026**
(21) Application number: 21175217.5
(22) Date of filing: 30.04.2014
(51) Int. Cl.: G05D 3/00, F16M 11/18, F16M 11/12, F16M 11/20, F16M 13/02, G03B 17/56, G05D 3/12

(54) **CONTROLLING DEVICE, GIMBAL ON WHICH THE CONTROLLING DEVICE IS APPLIED AND METHOD FOR CONTROLLING A GIMBAL**
STEUERUNGSVORRICHTUNG, TRAGRAHMEN AUF DEN DIE STEUERUNGSVORRICHTUNG ANGEWENDET WIRD, UND VERFAHREN ZUR STEUERUNG EINES TRAGRAHMENS
DISPOSITIF DE CONTROL, CARDAN SUR LEQUEL EST APPLIQUÉ LE DISPOSITIF DE CONTROL ET PROCÉDÉ DE COMMANDE D'UN CARDAN

(43) Date of publication of application: 10.11.2021
(62) Document number(s) of the earlier application(s) in accordance with Art. 76 EPC: 18211050.2 / 3 470 952; 14890869.2 / 3 139 239
(73) Proprietor: SZ DJI Osmo Technology Co., Ltd., Shenzhen, Guangdong 518057 (CN)
(72) Inventor: PAN, Paul, Shenzhen 518057 (CN); ZHU, Ming liang, Shenzhen 518057 (CN); ZHAO, Xi feng, Shenzhen 518057 (CN)
(74) Representative: Goddar, Heinz J.

(56) References cited:
- CN-U- 202 769 211
- JP-A- 2007 114 503
- US-A1- 2007 050 139
- US-A1- 2010 066 831
- US-A1- 2012 230 668
- YOUSER23: "Pocket 3 axis Gimbal joystick pan / roll / tilt operator controller with integrated video RX", YOUTUBE, 21 May 2013 (2013-05-21), pages 1 pp., XP054980481, Retrieved from the Internet <URL:https://www.youtube.com/watch?v=_Y8f2OZrSpo> [retrieved on 20200518]
- ANONYMOUS: "help please with wiring potentiometer joystick to a motor | Forum for Electronics", 28 April 2012 (2012-04-28), pages 1 - 9, XP093152021, Retrieved from the Internet <URL:https://www.edaboard.com/threads/help-please-with-wiring-potentiometer-joystick-to-a-motor.250284/>

## Description

### TECHNICAL FIELD

The invention relates to a supporting and controlling structure for use in video shooting, photo taking and/or surveillance, and in particular to a controlling device and a gimbal on which the controlling device is applied as well as a method for controlling a gimbal.

### BACKGROUND OF THE INVENTION

Currently, in the technical fields of video shooting, photo taking and/or surveillance and so on, a carrier loaded with a video camera or a still camera, for example, an aircraft, a car, a ship, a robot and a human body and so on, inherently has high frequency vibration and low frequency vibration, and thus needs to be configured with a stable self-balancing gimbal used to be loaded with the video camera, the still camera etc. to achieve stable shooting. Meanwhile, the gimbal is widely used for entertainments and model airplane video shooting and so on. Excellent photos and/or videos in various directions may be shot by utilizing a plurality of keypads or remote controller to wirelessly control lenses of cameras to perform directional actions such as a rotation, a pitch and so on. The gimbal may be used to support such optical devices such as a video camera, a still camera, a telescope, a remote video camera and a measuring instrument and so on. According to operations of these optical devices, it is necessary for the gimbal to have stable support function and be easy to control and adjust directions of the optical device. A dynamic self-balancing gyroscopic biaxial or triaxial gimbal may achieve such fixation, support and orientation action.

In one prior art technique, the gimbal may shoot videos and/or photos in various directions by using a plurality of keypads or a remote controller to wirelessly control the optical devices to perform directional actions such as rotation and pitch. With the solution utilizing keypads and remote controller wirelessly, the angle in pitch and/or rotation direction may be controlled through a plurality of keypads, causing a bad hand feeling and low accuracy in performing actions. In addition, a receiver is required because the remote controller is operated wirelessly, so that it is inconvenient to operate, and under certain circumstances, for example, in case of a handheld remote controller, the gimbal needs to be operated by several persons at the same time.

US 2007/050139 A1 discloses a stabilization system including a platform supported by two or more rotatably-coupled gimbal frames each having a pivot assembly disposed at its rotation axis to couple an actuator to a rotation sensor having a rotation-sensitive sensor axis that is fixedly disposed with respect to the rotation axis, and a controller including means for accepting the sensor signals and for producing each motor signal needed to dispose the platform in a predetermined angular position with respect to each rotation axis independent of changes in the base orientation. A motion simulator embodiment includes controller means for accepting an external slew signal sequence and means for producing the motor signals needed to move the platform along a predetermined sequence of positions represented by the slew signal sequence.

US 2010/066831 A1 discloses a camera apparatus that includes: a base; an outer case provided on the case for rotation around a first imaginary axis passing the base; an inner case provided on the outer case for rotation around a second imaginary axis extending on a plane intersecting with the first imaginary axis; a camera section incorporated in the inner case and having an image pickup optical system; a first driving section for rotating the outer case; a second driving section for rotating the inner case; and a conversion lens supported on the outer case; the inner case being rotated by the second driving section between a conversion lens use position at which an optical axis of the image pickup optical system is aligned with an optical axis of the conversion lens and a conversion lens non-use range within which an optical path of the image pickup optical system is displaced from the conversion lens.

JP 2007-114503 A addresses the problem of how to improve operability by eliminating complex operations needed for the control of the panning drive and tilting drive of a universal head and the optically axial rotation of an imaging apparatus.

The video from Youtube: youser23: "Pocket 3 axis Gimbal joystick pan / roll / tilt operator controller with integrated video RX", Youtube, 21 May 2013 (2013-05-21), page 1 pp., P054980481, discloses a three axias gimbal joystick.

### SUMMARY OF THE INVENTION

The invention is defined by claim 1 defining a gimbal for controlling an optical device to perform an action, claim 8 defining a controlling device for controlling an action of a gimbal and claim 10 defining a method for controlling a gimbal. Preferred embodiments of the invention, are provided in the description, in the figures and in the dependent claims. The controlling device, a gimbal on which the controlling device is applied and a method for controlling the gimbal which are easy to operate and have a good hand feeling, so as to solve the problems of a gimbal in the prior art that it is inconvenient to operate and has a bad hand feeling, since a plurality of keypads or a remote controller are employed to control wirelessly the optical device to perform a rotation, a pitch and so on.

The technical solutions adopted by the invention in order to solve technical problems thereof are as follows.

In some embodiments, the rocker may further comprise a keypad for switching operating modes of the gimbal.

In some embodiments, the controlling device may further comprise a support arm for supporting the rocker and a bracket located on an end of the support arm.

In some embodiments, the support arm is in a bucket shape.

In some embodiments, the performing assembly may comprise a first rotation member, a second rotation member connected with the first rotation member, a carrying member connected with the second rotation member, a first motor for driving the second rotation member to rotate relative to the first rotation member and a second motor for driving the carrying member to rotate relative to the second rotation member.

In some embodiments, the rocker may further comprise a keypad for switching operating modes of the gimbal.

The embodiments of the invention can realize the technical effects of easy operation and good hand feeling, since the rocker is utilized to send the control instruction.

### BRIEF DESCRIPTION OF THE DRAWINGS

**FIG. 1** is a structural schematic diagram of a gimbal according to an embodiment of the invention;
**FIG. 2** is a perceptive view of a rocker of a gimbal according to an embodiment of the invention.
**FIG. 3** is a partial structural schematic diagram of a rocker of a gimbal according to an embodiment of the invention;
**FIG. 4** is a perceptive view of a performing assembly of a gimbal according to an embodiment of the invention; and
**FIG. 5** is a flow chart of a method for controlling a gimbal according to an embodiment of the invention.

### DETAILED DESCRIPTION OF THE INVENTION

For a clear understanding of the technical features, objects and advantages of the invention, specific embodiments of the invention will now be explained in detail in conjunction with the accompanying drawings.

According to embodiments of the invention, a gimbal is provided, which may be loaded with an optical device thereon, for example, a video camera, a still camera, a telescope, a remote video camera, a measuring instrument and so on. The gimbal may be configured for fixing the optical device and optionally adjusting an attitude of the optical device (for example, change a height, an inclination angle, a shooting direction of the optical device and/or keep the optical device stable in a determined attitude) in order to obtain high quality videos and/or photos and so on.

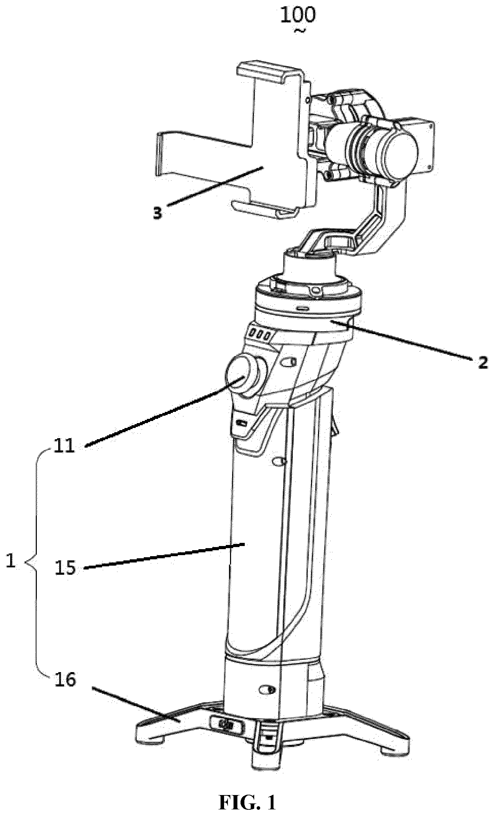

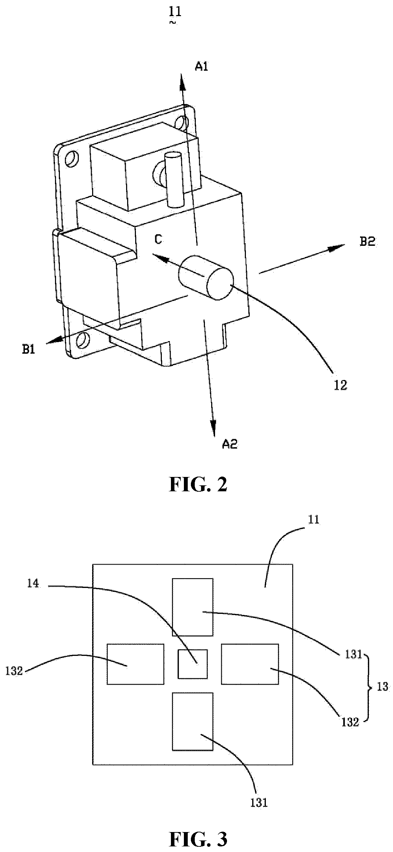

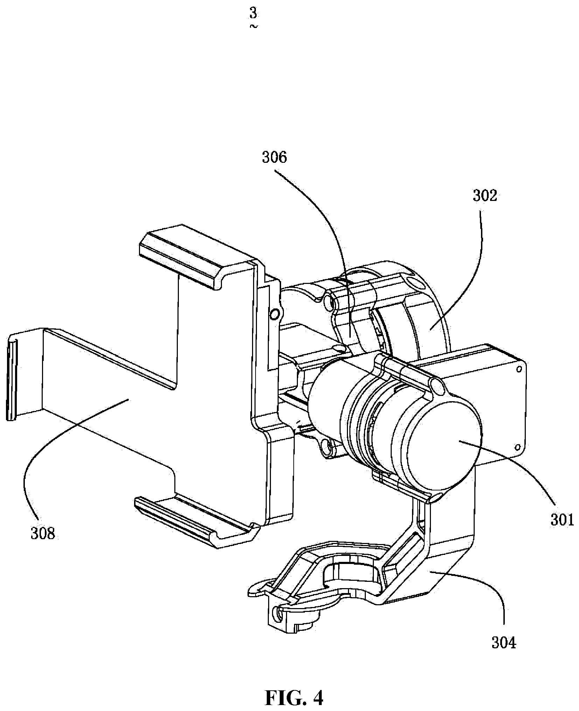

As shown in **FIGs.1** to **4****,** an embodiment of the invention provides a gimbal **100** configured to be loaded with an optical device, to control the optical device to perform actions, and to implement actions of the optical device such as pitch and/or rotation. The gimbal **100** may comprise a controlling device **1,** a controlling assembly **2** connected with the controlling device **1,** and a performing assembly **3** connected with the controlling assembly **2.** In some embodiments, the controlling assembly 2 may be disposed between the controlling device **1** and the performing assembly **3.**

The controlling device **1** comprises a rocker **11** configured for receiving an action instruction sent by a user and generating a control instruction to be sent to the controlling assembly **2.** The rocker **11** comprises a rocker handle **12** as well as a potentiometer assembly **13** and may comprise a keypad **14** respectively connected with the rocker handle **12**.

The rocker handle **12** is movable along an up direction **A1,** along a down direction **A2,** along a left direction **B1,** along a right direction **B2** and along a press direction **C.**

The potentiometer assembly **13** comprises a first potentiometer **131** configured for controlling a pitch action of the optical device and may comprise a second potentiometer **132** configured for controlling a rotation action of the optical device.

In some embodiments, the keypad **14** may be configured for switching operating modes of the gimbal **100** which may comprise a follow mode and a locked mode. In the follow mode, not only a swing caused during the movement of the gimbal **100** may be filtered out, but also the shooting direction of the optical device may follow up with the moving direction of the gimbal **100.** In the locked mode, the shooting direction of the optical device may be already locked in a specified direction (for example, an initial direction of the optical device), regardless of how the gimbal **100** moves. Both of the above two modes may be suitable for a single person to shoot with the optical device and control the direction of the optical device at the same time.

The controlling assembly **2** is connected with the controlling device **1,** and is configured for generating, based on a control instruction sent by the controlling device **1,** a performing instruction for implementing a corresponding action, and sending the performing instruction to the performing assembly **3.**

The performing assembly **3** is configured for implementing an action control for the optical device according to the performing instruction.

Further, the controlling device **1** may also comprise a support arm **15** for supporting the rocker **11,** and a bracket **16** located on an end of the support arm **15.** The support arm **15** may be in a hollow bucket shape.

In some instances, the performing assembly **3** may comprise a first rotation member **304,** a second rotation member **306** rotatably connected with the first rotation member **304,** a carrying member **308** connected with the second rotation member **306,** a first motor **301** for driving the second rotation member **306** to rotate relative to the first rotation member **304,** and a second motor **302** for driving the carrying member **308** to rotate relative to the second rotation member **306.** The optical device may be loaded on the carrying member **308.** The first motor **301** may drive the second rotation member **306** to rotate relative to the first rotation member **304,** therefore enabling the optical device loaded on the carrying member **308** to perform a pitch action; the second motor **302** may drive the carrying member **308** to rotate relative to the second rotation member **306,** therefore enabling the optical device loaded on the carrying member **308** to perform a rotation action (i.e. an action of leftward or rightward tilt).

Further, in some embodiments, by controlling the rocker handle **12** in the controlling device **1,** a user may send the rocker **11** six kinds of action instructions which are respectively: a short press action instruction, a long press action instruction, a push-up action instruction, a push-down action instruction, a push-left action instruction and a push-right action instruction. In some embodiments, the short press action instruction may mean that the user may press the rocker handle **12** along the press direction **C** for a short time when the rocker handle **12** is in the middle position of the rocker **11;** the long press action instruction may mean that the user may press the rocker handle **12** along the press direction **C** for a long time when the rocker handle **12** is in a non-middle position of the rocker **11.** In some embodiments, the "short time" may be less than 3 seconds; and the "long time" may be longer than 3 seconds. Of course, the duration of the "short time" and "long time" may be adjusted according to actual requirements. With regard to the middle position of the rocker **11,** the push-up action instruction may mean that the user may push the rocker handle **12** along the up direction **A1**; the push-down action instruction may mean that the user may push the rocker handle **12** along the down direction **A2;** the push-left action instruction may mean that the user may push the rocker handle **12** along the left direction **B1**; and the push-right action instruction may mean that the user may push the rocker handle **12** along the right direction **B2.**

In some instances, when the user sends the push-up action instruction to the rocker **11,** that is, the user pushes the rocker handle **12** to move along the up direction **A1,** the first motor **301** may accelerate forwardly.

In some instances, when the user sends the push-down action instruction to the rocker **11,** that is, the user pushes the rocker handle **12** to move along the down direction **A2,** the first motor 301 may accelerate reversely.

In some instances, when the user sends the push-left action instruction to the rocker **11,** that is, the user pushes the rocker handle **12** to move along the left direction **B1,** the second motor **302** may accelerate forwardly.

In some instances, when the user sends the push-right action instruction to the rocker 11, that is, the user pushes the rocker handle **12** to move along the right direction **B2,** the second motor **302** may accelerate reversely.

In some instances, when the rocker handle **12** is in the middle position and the user sends the short press action instruction to the rocker **11,** that is, the user presses the rocker handle **12** along the press direction **C** for a short time, the gimbal **100** may be switched from one operating mode to another operating mode. In some embodiments, the gimbal **100** may have two operating modes comprising a follow mode and a locked model. For example, when the gimbal 100 is in the follow mode, if the user sends the short press action instruction to the rocker **11,** the operating mode of the gimbal **100** may be switched to the locked mode. Alternatively, when the gimbal **100** is in the locked mode, if the user sends the short press action instruction to the rocker **11,** the operating mode of the gimbal **100** may be switched to the follow mode.

When the rocker handle **12** is in a non-middle position, if the user sends the long press action instruction to the rocker **11,** the rocker handle **12** may return to the middle position.

In addition, when the rocker handle **12** is in the middle position, the first motor **301** and the second motor **302** may be in a stationary state but powered so as to hold torque.

In some embodiments, control instructions of the controlling device **1** may comprise a look-up control instruction, a look-down control instruction, a leftward-tilt control instruction, a rightward-tilt control instruction, a back-to-middle control instruction and a switch control instruction.

In some embodiments, performing instructions of the controlling assembly **2** may comprise a look-up performing instruction, a look-down performing instruction, a leftward-tilt performing instruction, a rightward-tilt performing instruction, a hold performing instruction and a switch performing instruction.

In particular in use, as the user sends the push-up action instruction to the rocker **11,** that is, the user pushes the rocker handle **12** to move along the up direction **A1,** the rocker handle **12** may contact with the first potentiometer **131,** and the rocker handle **12** may send the look-up control instruction to the controlling assembly **2** via the first potentiometer **131;** the controlling assembly **2,** after receiving the look-up control instruction, may generate the look-up performing instruction for enabling the gimbal **100** to perform the look-up action, and send the look-up performing instruction to the performing assembly **3;** the performing assembly **3,** after receiving the look-up performing instruction, may control the gimbal **100** to perform the look-up action, that is, the first motor **301** may drive the second rotation member **306** to rotate clockwise relative to the first rotation member **304,** therefore enabling the optical device loaded on the carrying member **308** to implement the look-up action to obtain videos and/or photos at corresponding angle of view and so on. Technical solutions that the controlling assembly **2** receives control instructions and sends performing instructions are well known in the present industry and will not be described herein.

In some instances, as the user sends the push-down action instruction to the rocker **11,** the rocker handle **12** may contact with the first potentiometer **131,** and the rocker handle **12** sends the look-down control instruction to the controlling assembly **2** via the first potentiometer **131;** the controlling assembly **2,** after receiving the look-down control instruction, may generate the look-down performing instruction for enabling the gimbal **100** to perform a look-down action, and send the look-down performing instruction to the performing assembly **3;** the performing assembly **3,** after receiving the look-down performing instruction, may control the gimbal **100** to perform the look-down action, that is, the first motor **301** may drive the second rotation member **306** to rotate counterclockwise relative to the first rotation member **304,** therefore enabling the optical device loaded on the carrying member **308** to implement the corresponding look-down action to obtain videos and/or photos at corresponding more suitable angle of view and so on.

In some instances, as the user sends the push-left action instruction to the rocker **11,** the rocker handle **12** may contact with the second potentiometer **132,** and the rocker handle **12** may send the leftward-tilt control instruction to the controlling assembly **2** via the second potentiometer **132;** the controlling assembly **2,** after receiving the leftward-tilt control instruction, may generate the leftward-tilt performing instruction for enabling the gimbal **100** to perform a leftward-tilt action, and send the leftward-tilt performing instruction to the performing assembly **3;** the performing assembly **3,** after receiving the leftward-tilt performing instruction, may control the gimbal **100** to perform the leftward-tilt action, that is, the second motor **302** may drive the carrying member **308** to rotate clockwise relative to the second rotation member **306,** therefore enabling the optical device loaded on the carrying member **308** to implement the corresponding leftward-tilt action to obtain videos and/or photos at corresponding more suitable angle of view and so on.

In some instances, as the user sends the push-right action instruction to the rocker **11,** the rocker handle **12** may contact with the second potentiometer **132,** and the rocker handle **12** may send the rightward-tilt control instruction to the controlling assembly **2** via the second potentiometer **132;** the controlling assembly **2,** after receiving the rightward-tilt control instruction, may generate the rightward-tilt performing instruction for enabling the gimbal **100** to perform a rightward-tilt action, and send the rightward-tilt performing instruction to the performing assembly **3;** the performing assembly **3,** after receiving the rightward-tilt performing instruction, may control the gimbal **100** to perform the rightward-tilt action, that is, the second motor **302** may drive the carrying member **308** to rotate towards the right relative to the second rotation member **306,** therefore enabling the optical device loaded on the carrying member **308** to implement the corresponding action of rotating towards the right to obtain videos and/or photos at corresponding more suitable angle of view and so on.

In some instances, when the rocker handle **12** is in the middle position and the user sends the short press action instruction to the rocker **11,** the rocker handle **12** may contact with the keypad **14,** and the rocker handle **12** may send the switch control instruction to the controlling assembly **2** via the keypad **14.** The controlling assembly **2,** after receiving the switch control instruction, may generate the switch performing instruction for enabling the gimbal **100** to perform operating mode switch, and send the switch performing instruction to the performing assembly **3.** The performing assembly **3,** after receiving the switch performing instruction, may switch operating mode of the gimbal **100.** For example, when the gimbal **100** is in the follow mode, if the user sends the short press action instruction to the rocker **11,** the operating mode of the gimbal **100** may be switched to the locked mode. Alternatively, in some embodiments, when the gimbal 100 is in the locked mode, if the user sends the short press action instruction to the rocker **11,** the operating mode of the gimbal **100** may be switched to the follow mode.

According to the claimed subject-matter, when the rocker handle **12** is held in the position towards the up direction **A1** or the down direction **A2** from the middle position, if the user sends the long press action instruction to the rocker **11,** the rocker handle **12** presses the first potentiometer **131** for a long time, and the rocker handle **12** sends the back-to-middle control instruction to the controlling assembly **2** via the first potentiometer **131.** The controlling assembly **2,** after receiving the back-to-middle control instruction, generates the hold performing instruction for enabling the gimbal **100** to hold the current attitude, and send the hold performing instruction to the preforming assembly **3.** After the performing assembly **3** receives the hold performing instruction, the first motor **301** may be in a stationary state but powered so as to hold torque. At this time, the rocker handle **12** may return to the middle position.

According to the claimed subject-matter, when the rocker handle **12** is held in the position towards the left direction **B1** or the right direction **B2** from the middle position, if the user sends the long press action instruction to the rocker **11,** the rocker handler **12** may press the second potentiometer **132** for a long time, and the rocker handle **12** may send the back-to-middle control instruction to the controlling assembly **2** via the second potentiometer **132.** The controlling assembly **2,** after receiving the back-to-middle control instruction, may generate the hold performing instruction for enabling the gimbal **100** to hold the current attitude and send the hold performing instruction to the performing assembly **3.** After the performing assembly **3** receives the hold performing instruction, the second motor **302** may be in a stationary state but powered so as to hold torque. At this time, the rocker handle **12** may return to the middle position.

The gimbal **100** according to some embodiments of the invention is not only easy to operate, but also has a good hand feeling, since the rocker **11** is utilized to send the control instruction.

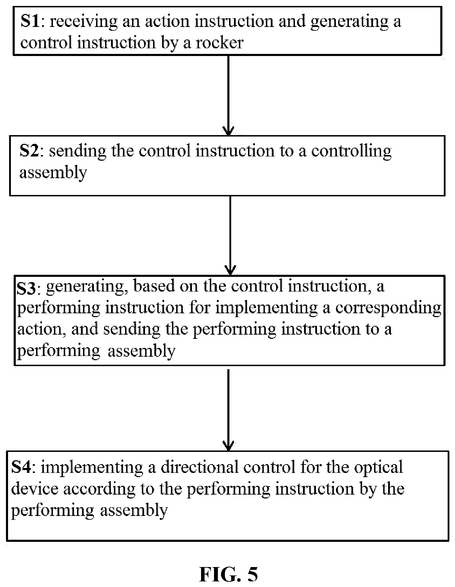

Referring to **FIGs.1** to **5****,** an embodiment of the invention also provides a method for controlling the gimbal **100,** for controlling an optical device to perform action, the method comprises the following steps:
**S1:** receiving an action instruction and generating a control instruction by the rocker **11.** The rocker **11** comprises a rocker handle **12** as well as a potentiometer assembly **13** and may comprise a keypad **14** connected with the rocker handle **12.** The potentiometer assembly **13** may comprise a first potentiometer **131** for controlling a pitch action of the optical device via the gimbal **100** and a second potentiometer **132** for controlling a rotation action of the optical device via the gimbal 100. In some embodiments, the keypad **14** may be configured for switching operating modes of the gimbal **100.**

The user may send the rocker **11** six kinds of action instructions, which may be respectively: a short press action instruction, a long press action instruction, a push-up action instruction, a push-down action instruction, a push-left action instruction and a push-right action instruction.

In some embodiments, the control instructions may be respectively: a look-up control instruction, a look-down control instruction, a leftward-tilt control instruction, a rightward-tilt control instruction, and a switch control instructior In the claimed subject-matter, the control instructions include a back-to-middle control instruction.

In some embodiments, when the user sends the push-up action instruction to the rocker **11,** that is, the user pushes the rocker handle **12** to move along the up direction **A1,** the rocker handle **12** may contact with the first potentiometer **131,** therefore generating the look-up control instruction.

In some embodiments, when the user sends the push-down action instruction to the rocker **11,** that is, the user pushes the rocker handle **12** to move along the down direction **A2,** the rocker handle **12** may contact with the first potentiometer **131,** therefore generating the look-down control instruction.

In some embodiments, when the user sends the push-left action instruction to the rocker **11,** that is, the user pushes the rocker handle **12** to move along the left direction **B1,** the rocker handle **12** may contact with the second potentiometer **132,** therefore generating the leftward-tilt control instruction.

In some embodiments, when the user sends the push-right action instruction to the rocker **11,** that is, the user pushes the rocker handle **12** to move along the right direction **B2,** the rocker handle **12** may contact with the second potentiometer **132,** therefore generating the rightward-tilt control instruction.

In some instances, when the rocker handle **12** is in the middle position and the user sends the short press action instruction to the rocker **11,** that is, the user presses the rocker handle **12** for a short time, the rocker handle **12** may contact with the keypad **14,** therefore generating the switch control instruction. The gimbal **100** may be switched from one operating mode to another operating mode. In some embodiments, the gimbal **100** may have two operating modes comprising a follow mode and a locked mode. For example, when the gimbal **100** is in the follow mode, if the user sends the short press action instruction to the rocker **11,** the operating mode of the gimbal **11** may be switched to the locked mode. Alternatively, when the gimbal **100** is in the locked mode, if the user sends the short press action instruction to the rocker **11,** the operating mode of the gimbal **100** may be switched to the follow mode.

In some instances, when the rocker handle is in a non-middle position, as the user sends the long press action instruction to the rocker **11,** the rocker handle **2** may contact with the first potentiometer **131** or the second potentiometer **132,** therefore generating the back-to-middle control instruction. The rocker handle **12** may return to the middle position.

In addition, when the rocker handle **12** is in the middle position, the first motor **301** and the second motor **302** may be in a stationary state but powered so as to hold torque.

**S2:** sending the control instruction to a controlling assembly 2;
In some instances, as the user operates the rocker **11** to push it to move towards the up direction **A1** through the rocker handle **12,** the rocker **11** may send a control instruction for a look-up action to the controlling assembly **2** via the first potentiometer **131.** As the user operates the rocker **11** to push it to move towards the down direction **A2** through the rocker handle **12,** the rocker **11** may send a control instruction for a look-down action to the controlling assembly **2** via the first potentiometer **131.** As the user operates the rocker **11** to push it to move towards the left direction **B1** through the rocker handle **12,** the rocker **11** may send a control instruction for a left-rotating action to the controlling assembly **2** via the second potentiometer **132.** As the user operates the rocker **11** to push it to move towards the right direction **B2** through the rocker handle **12,** the rocker **11** may send a control instruction for a right-rotating action to the controlling assembly **2** via the second potentiometer **132.** When the rocker **11** is in the middle position, as the user presses the rocker handle **12** for a short time, the rocker **11** may send the switch control instruction to the controlling assembly **2** via the keypad **14.** When the rocker **11** is in a non-middle position, as the user presses the rocker handle **12** for a long time, the rocker **11** may send the back-to-middle control instruction to the controlling assembly **2** via the first potentiometer **131** or the second potentiometer **132.**

**S3:** generating, based on the control instruction, a performing instruction for implementing a corresponding action, and sending the preforming instruction to the performing assembly **3.**

In some embodiments, the performing instructions of the controlling assembly **2** may comprise a look-up performing instruction, a look-down performing instruction, a leftward-tilt performing instruction, a rightward-tilt performing instruction, a hold performing instruction and a switch performing instruction.

In some instances, the controlling assembly **2,** after receiving the look-up control instruction, may generate the look-up performing instruction for enabling the gimbal **100** to perform a look-up action and send the look-up performing instruction to the performing assembly **3.**

In some instances, the controlling assembly **2,** after receiving the look-down control instruction, may generate the look-down performing instruction for enabling the gimbal **100** to perform a look-down action and send the look-down performing instruction to the performing assembly **3.**

In some instances, the controlling assembly **2,** after receiving the leftward-tilt control instruction, may generate the leftward-tilt performing instruction for enabling the gimbal **100** to perform a leftward-tilt action and send the leftward-tilt performing instruction to the performing assembly **3.**

In some instances, the controlling assembly **2,** after receiving the rightward-tilt control instruction, may generate the rightward-tilt performing instruction for enabling the gimbal **100** to perform a rightward-tilt action and send the rightward-tilt performing instruction to the performing assembly **3.**

In the claimed subject-matter, the
controlling assembly **2,** after receiving the back-to-middle control instruction, generates the hold performing instruction for enabling the gimbal **100** to hold the current attitude and send the hold performing instruction to the performing assembly **3.**

In some instances, the controlling assembly **2,** after receiving the switch control instruction, may generate the switch performing instruction for enabling the gimbal **100** to perform operating mode switch and send the switch performing instruction to the performing assembly **3.**

**S4:** implementing a directional control for the optical device according to the performing instruction by the performing assembly **3.**

In some instances, the performing assembly **3,** after receiving the look-up performing instruction, may control the gimbal **100** to perform a look-up action, that is, the first motor **301** may drive the second rotation member **306** to rotate clockwise relative to the first rotation member **304,** therefore enabling the optical device loaded on the carrying member **308** to implement a corresponding look-up action, to obtain videos and/or photos at corresponding angle of view and so on. The technical solutions that the controlling assembly **2** receives control instructions and sends performing instructions are well known in the present industry and will not be described herein.

In some instances, the preforming assembly **3,** after receiving the look-down performing instruction, may control the gimbal **100** to perform a look-down action, that is, the first motor **301** may drive the second rotation member **306** to rotate counterclockwise relative to the first rotation member **304,** therefore enabling the optical device loaded on the carrying member **308** to implement the corresponding look-down action, to obtain videos and/or photos at corresponding more suitable angle of view.

In some instances, the preforming assembly **3,** after receiving the leftward-tilt performing instruction, may control the gimbal **100** to perform a left-rotating action, that is, the second motor **302** may drive the carrying member **308** to rotate clockwise relative to the second rotation member **306,** therefore enabling the optical device loaded on the carrying member **308** to implement the corresponding left-rotating action, to obtain videos and/or photos at corresponding more suitable angle of view.

In some instances, the preforming assembly **3,** after receiving the rightward-tilt performing instruction, may control the gimbal **100** to perform a right-rotating action, that is, the second motor **302** may drive the carrying member **308** to rotate counterclockwise relative to the second rotation member **306,** therefore enabling the optical device loaded on the carrying member **308** to implement the corresponding right-rotating action, to obtain videos and/or photos at corresponding more suitable angle of view.

In some instances, the performing assembly **3,** after receiving the hold performing instruction, may control the gimbal **100** to hold the current attitude, that is, the first motor **301** and the second motor **302** may be in the stationary state but powered so as to hold torque.

In some instances, the performing assembly **3,** after receiving the switch performing instruction, may switch the current operating mode of the gimbal **100.** For example, when the gimbal **100** is in the follow mode, the operating mode of the gimbal may be switched to the locked mode. Alternatively, when the gimbal is in the locked mode, the operating mode of the gimbal **100** may be switched to the follow mode.

The method for operating gimbal **100** according to an embodiment of the invention is not only easy to operate, but also has a good hand feeling, since the rocker **11** is utilized to send the control instruction.

While the preferred embodiments of the present invention have been described in connection with the drawings above, the protection scope of the present invention is not limited thereto. The embodiments are merely illustrative, but not limiting.

## Claims

1. A gimbal for controlling an optical device to perform an action, comprising a controlling device (1), a controlling assembly (2) connected with the controlling device (1), and a performing assembly (3) connected with the controlling assembly (2);
the controlling device (1) comprises a rocker (11) for receiving an action instruction and generating a control instruction to be sent to the controlling assembly (2), wherein the rocker (11) comprises a rocker handle (12) that is movable along an up direction (A1), along a down direction (A2), along a left direction (B1), and along a right direction (B2);
the controlling assembly (2) is configured for generating, based on the control instruction sent by the controlling device (1), a performing instruction for implementing a corresponding action, and sending the performing instruction to the performing assembly (3), wherein the performing instructions of the controlling assembly (2) comprise a look-up performing instruction when the rocker handle (12) is moved towards the up direction (A1), a look-down performing instruction when the rocker handle (12) is moved towards the down direction (A2), a leftward-tilt performing instruction when the rocker handle (12) is moved towards the left direction (B1), a rightward-tilt performing instruction when the rocker handle (12) is moved towards the right direction (B2); and
the performing assembly (3) is configured for implementing a directional control for the optical device according to the performing instruction;
wherein the gimbal includes a potentiometer assembly (13) connected with the rocker handle (12), the potentiometer assembly (13) comprising a first potentiometer (131) for controlling a pitch action of the optical device;
wherein the gimbal is **characterized in that**
in the case that the rocker handle (12) is held in a position towards the up direction (A1) or the down direction (A2) and presses the first potentiometer (131) for a period of time longer than a predetermined time, the rocker handle (12) is configured to send a back-to-middle control instruction to the controlling assembly (2) via the first potentiometer (131),
wherein the controlling assembly (2) is configured to, after receiving the back-to-middle control instruction, generate a hold performing instruction to the performing assembly (12) for enabling the gimbal to hold a current attitude and returning the rocker handle (12) to a middle position.

2. The gimbal according to claim 1, wherein the performing assembly (3) comprises a first rotation member (304), a second rotation member (306) connected with the first rotation member (304), a carrying member (308) connected with the second rotation member (306), a first motor for driving the second rotation member (306) to rotate relative to the first rotation member (304) therefore enabling the optical device that is loaded to the carrying member (308) to perform a pitch action, and a second motor for driving the carrying member to rotate relative to the second rotation member (306) therefore enabling the optical device loaded to the carrying member to perform an action of leftward tilt or rightward tilt;
wherein the performing assembly (3) is configured to, after receiving the leftward-tilt performing instruction, control the second motor to drive the carrying member (308) to rotate clockwise relative to the second rotation member (306), therefore enabling the optical device to perform the leftward tilt,
or
wherein the performing assembly (3) is configured to, after receiving the rightward-tilt performing instruction, control the second motor to drive the carrying member (308) to rotate counter-clockwise relative to the second rotation member, therefore enabling the optical device to perform the rightward tilt.

3. The gimbal according to claim 1, wherein gimbal is configured such that as the rocker handle (12) is moved along the up direction (Al), the rocker handle (12) contacts with the first potentiometer (131), and the rocker handle (12) is configured to a send look-up control instruction to the controlling assembly (2) via the first potentiometer (131); the controlling assembly (2), after receiving the took-up control instruction, is configured to generate the look-up performing instruction for enabling the gimbal (100) to perform the look-up action, and to send the look-up performing instruction to the performing assembly (3); the performing assembly (3), after receiving the look-up performing instruction, is configured to control the gimbal (100) to perform the look-up action.

4. The gimbal according to claim 1 or 3, wherein the gimbal is configured such that as the rocker handle (12) is moved towards the right direction (B2), the rocker (11) is configured to send a control instruction for a right-rotating action to the controlling assembly (2) via the second potentiometer (132).

5. The gimbal according to claim 1, wherein the controlling device further comprises a support arm for supporting the rocker.

6. The gimbal according to claim 1, wherein the controlling device further comprises a support arm for supporting the rocker (11) and a bracket located on an end of the support arm, or wherein the support arm (15) is in a bucket shape.

7. The gimbal according to claim 1, wherein the rocker handle (12) is movable along a press direction (C), and wherein the performing instructions of the controlling assembly (2) comprise a switch performing instruction for enabling the gimbal (100) to perform operating mode switch, when the rocker handle (12) is pressed towards the press direction (C).

8. A controlling device (1) for controlling an action of a gimbal according to any one of the preceding claims, the controlling device (1) is configured to connect to the controlling assembly (2), the controlling device (1) comprising the rocker (11) for receiving a control instruction and sending the control instruction to the controlling assembly (2), wherein the rocker (11) comprises the rocker handle (12) and the potentiometer assembly (13) connected with the rocker handle (12), the potentiometer assembly (13) further comprising a second potentiometer (132) for controlling a rotation action of the optical device via the gimbal;
the controlling device (1) being **characterized in that**
when the rocker handle (12) is held in a position towards the left direction (B1) or the right direction (B2) and presses the second potentiometer (132) for a period of time longer than a predetermined time,
the rocker handle (12) is configured to send the back-to-middle control instruction to the controlling assembly (2) via the second potentiometer (132), or
wherein when the rocker handle (12) is held in a position towards the up direction (A1) or the down direction (A2) and presses the first potentiometer (131) for a period of time, the rocker handle (12) is configured to send a back-to-middle control instruction to the controlling assembly (2) via the first potentiometer (131);
wherein the controlling assembly (2) is configured to, after receiving the back-to-middle control instruction, generate a hold performing instruction to the performing assembly (12) for enabling the gimbal to hold a current attitude and returning the rocker handle (12) to a middle position.

9. The controlling device (1) according to claim 7 or the gimbal of claim 1, wherein the rocker (11) further comprises a keypad (14) for switching operating modes of the gimbal.

10. A method for controlling a gimbal according to any one of claims 1 to 7, the method comprising:
receiving an action instruction and generating a control instruction by a rocker (11);
sending the control instruction to a controlling assembly (2);
generating, based on the control instruction, a performing instruction for implementing a corresponding action, and sending the performing instruction to a performing assembly (3); and
implementing a directional control for the optical device according to the performing instruction by the performing assembly (3);
wherein the method for controlling the gimbal device is **characterized in that**
when the rocker handle (12) is held in a position towards the left direction (B1) or the right direction (B2) and presses the second potentiometer (132) for a period of time longer than a predetermined time, the rocker handle (12) is configured to send the back-to-middle control instruction to the controlling assembly (2) via a second potentiometer (132) comprised by the potentiometer assembly (13), the second potentiometer (132) being for controlling a rotation action of the optical device via the gimbal, or
wherein when the rocker handle (12) is held in a position towards the up direction (A1) or the down direction (A2) and presses the first potentiometer (131) for a period of time, the rocker handle (12) is configured to send a back-to-middle control instruction to the controlling assembly (2) via the first potentiometer (131);
wherein the controlling assembly (2) is configured to, after receiving the back-to-middle control instruction, generate a hold performing instruction to the performing assembly (12) for enabling the gimbal to hold a current attitude and returning the rocker handle (12) to a middle position.

11. The method according to claim 10, wherein the rocker (11) further comprises a keypad (14) for switching operating modes of the gimbal.

## Patentansprüche

1. Kardanaufhängung zum Steuern einer optischen Vorrichtung, um eine Aktion auszuführen, umfassend eine Steuervorrichtung (1), eine Steueranordnung (2), die mit der Steuervorrichtung (1) verbunden ist, und eine Ausführungsanordnung (3), die mit der Steueranordnung (2) verbunden ist;
die Steuervorrichtung (1) eine Wippe (11) zum Empfangen einer Aktionsanweisung und Erzeugen einer Steueranweisung, die an die Steueranordnung (2) gesendet werden soll, umfasst, wobei die Wippe (11) einen Wippengriff (12) umfasst, der entlang einer Aufwärtsrichtung (A1), entlang einer Abwärtsrichtung (A2), entlang einer Linksrichtung (B1) und entlang einer Rechtsrichtung (B2) beweglich ist;
die Steueranordnung (2) konfiguriert ist, um basierend auf der von der Steuervorrichtung (1) gesendeten Steueranweisung eine Ausführungsanweisung zum Implementieren einer entsprechenden Aktion zu erzeugen und die Ausführungsanweisung an die Ausführungsanordnung (3) zu senden, wobei die Ausführungsanweisungen der Steueranordnung (2) eine Look-up-Ausführungsanweisung, wenn der Wippengriff (12) in die Aufwärtsrichtung (A1) bewegt wird, eine Look-down-Ausführungsanweisung, wenn der Wippengriff (12) in die Abwärtsrichtung (A2) bewegt wird, eine nach links geneigte Ausführungsanweisung, wenn der Wippengriff (12) in die Linksrichtung (B1) bewegt wird, eine nach rechts geneigte Ausführungsanweisung, wenn der Wippengriff (12) in die Rechtsrichtung (B2) bewegt wird, umfassen; und
die Ausführungsanordnung (3) konfiguriert ist, um eine Richtungssteuerung für die optische Vorrichtung gemäß der Ausführungsanweisung zu implementieren;
wobei die Kardanaufhängung eine Potentiometeranordnung (13) beinhaltet, die mit dem Wippengriff (12) verbunden ist, wobei die Potentiometeranordnung (13) ein erstes Potentiometer (131) zum Steuern einer Nickaktion der optischen Vorrichtung umfasst;
wobei die Kardanaufhängung **dadurch gekennzeichnet ist, dass**
in dem Fall, dass der Wippengriff (12) in einer Position in die Aufwärtsrichtung (A1) oder die Abwärtsrichtung (A2) gehalten wird und das erste Potentiometer (131) für einen Zeitraum drückt, der länger als eine vorbestimmte Zeit ist, der Wippengriff (12) konfiguriert ist, um eine Back-to-Middle-Steueranweisung über das erste Potentiometer (131) an die Steueranordnung (2) zu senden, wobei die Steueranordnung (2) konfiguriert ist, um nach dem Empfangen der Back-to-Middle-Steueranweisung eine Halteausführungsanweisung an die Ausführungsanordnung (12) zu erzeugen, um es der Kardanaufhängung zu ermöglichen, eine aktuelle Lage zu halten und den Wippengriff (12) in eine mittlere Position zurückzubringen.

2. Kardanaufhängung nach Anspruch 1, wobei die Ausführungsanordnung (3) ein erstes Drehelement (304), ein zweites Drehelement (306), das mit dem ersten Drehelement (304) verbunden ist, ein Tragelement (308), das mit dem zweiten Drehelement (306) verbunden ist, einen ersten Motor zum Antreiben des zweiten Drehelements (306), um sich relativ zu dem ersten Drehelement (304) zu drehen, wodurch es der optischen Vorrichtung, die auf das Tragelement (308) geladen ist, ermöglicht wird, eine Nickaktion auszuführen, und einen zweiten Motor zum Antreiben des Tragelements, um sich relativ zu dem zweiten Drehelement (306) zu drehen, wodurch es der optischen Vorrichtung, die auf das Tragelement geladen ist, ermöglicht wird, eine Aktion des Kippens nach links oder des Kippens nach rechts auszuführen, umfasst;
wobei die Ausführungsanordnung (3) konfiguriert ist, um nach dem Empfangen der Ausführungsanweisung zum Kippen nach links den zweiten Motor zu steuern, um das Tragelement (308) anzutreiben, um sich im Uhrzeigersinn relativ zu dem zweiten Drehelement (306) zu drehen, wodurch es der optischen Vorrichtung ermöglicht wird, das Kippen nach links auszuführen,
oder
wobei die Ausführungsanordnung (3) konfiguriert ist, um nach dem Empfangen der Ausführungsanweisung zum Kippen nach rechts den zweiten Motor zu steuern, um das Tragelement (308) anzutreiben, um sich im Gegenuhrzeigersinn relativ zu dem zweiten Drehelement zu drehen, wodurch es der optischen Vorrichtung ermöglicht wird, das Kippen nach rechts auszuführen.

3. Kardanaufhängung nach Anspruch 1, wobei die Kardanaufhängung so konfiguriert ist, dass, wenn der Wippengriff (12) entlang der Aufwärtsrichtung (A1) bewegt wird, der Wippengriff (12) das erste Potentiometer (131) berührt und der Wippengriff (12) konfiguriert ist, um eine Nachschlagesteueranweisung über das erste Potentiometer (131) an die Steueranordnung (2) zu senden; wobei die Steueranordnung (2) nach dem Empfangen der Nachschlagesteueranweisung konfiguriert ist, um die Nachschlageausführungsanweisung zu erzeugen, um es der Kardanaufhängung (100) zu ermöglichen, die Nachschlageaktion auszuführen, und um die Nachschlageausführungsanweisung an die Ausführungsanordnung (3) zu senden; wobei die Ausführungsanordnung (3) nach dem Empfangen der Nachschlageausführungsanweisung konfiguriert ist, um die Kardanaufhängung (100) zu steuern, um die Nachschlageaktion auszuführen.

4. Kardanaufhängung nach Anspruch 1 oder 3, wobei die Kardanaufhängung so konfiguriert ist, dass, wenn der Wippengriff (12) in die Rechtsrichtung (B2) bewegt wird, die Wippe (11) konfiguriert ist, um eine Steueranweisung für eine Rechtsdrehaktion über das zweite Potentiometer (132) an die Steueranordnung (2) zu senden.

5. Kardanaufhängung nach Anspruch 1, wobei die Steuervorrichtung ferner einen Stützarm zum Stützen der Wippe umfasst.

6. Kardanaufhängung nach Anspruch 1, wobei die Steuervorrichtung ferner einen Stützarm zum Stützen der Wippe (11) und eine Halterung, die sich an einem Ende des Stützarms befindet, umfasst, oder wobei der Stützarm (15) schaufelförmig ist.

7. Kardanaufhängung nach Anspruch 1, wobei der Wippengriff (12) entlang einer Druckrichtung (A) beweglich ist. Kardanaufhängung nach Anspruch 1, wobei die Steuervorrichtung ferner einen Schalterausführungsbefehl umfasst, um es der Kardanaufhängung (100) zu ermöglichen, einen Betriebsmodusschalter auszuführen, wenn der Wippengriff (12) in die Druckrichtung (C) gedrückt wird, und wobei die Ausführungsanweisungen der Steueranordnung (2) einen Schalterausführungsbefehl umfassen, um es der Kardanaufhängung (100) zu ermöglichen, einen Betriebsmodusschalter auszuführen, wenn der Wippengriff (12) in die Druckrichtung (C) gedrückt wird.

8. Steuervorrichtung (1) zum Steuern einer Aktion einer Kardanaufhängung nach einem der vorhergehenden Ansprüche, wobei die Steuervorrichtung (1) konfiguriert ist, um sich mit der Steueranordnung (2) zu verbinden, wobei die Steuervorrichtung (1) die Wippe (11) zum Empfangen einer Steueranweisung und Senden der Steueranweisung an die Steueranordnung (2) umfasst, wobei die Wippe (11) den Wippengriff (12) und die Potentiometeranordnung (13), die mit dem Wippengriff (12) verbunden ist, umfasst;
wobei die Potentiometeranordnung (13) ferner ein zweites Potentiometer (132) zum Steuern einer Drehaktion der optischen Vorrichtung über die Kardanaufhängung umfasst;
wobei die Steuervorrichtung (1) **dadurch gekennzeichnet ist, dass**
wenn der Wippengriff (12) in einer Position in die Linksrichtung (B1) oder die Rechtsrichtung (B2) gehalten wird und das zweite Potentiometer (132) für einen Zeitraum drückt, der länger als eine vorbestimmte Zeit ist, der Wippengriff (12) konfiguriert ist, um die Back-to-Middle-Steueranweisung über das zweite Potentiometer (132) an die Steueranordnung (2) zu senden, oder
wobei, wenn der Wippengriff (12) in einer Position in die Aufwärtsrichtung (A1) oder die Abwärtsrichtung (A2) gehalten wird und das erste Potentiometer (131) für einen Zeitraum drückt, der Wippengriff (12) konfiguriert ist, um eine Back-to-Middle-Steueranweisung über das erste Potentiometer (131) an die Steueranordnung (2) zu senden;
wobei die Steueranordnung (2) konfiguriert ist, um nach dem Empfangen der Back-to-Middle-Steueranweisung eine Halteausführungsanweisung an die Ausführungsanordnung (12) zu erzeugen, um es der Kardanaufhängung zu ermöglichen, eine aktuelle Lage zu halten und den Wippengriff (12) in eine mittlere Position zurückzubringen.

9. Steuervorrichtung (1) nach Anspruch 7 oder Kardanaufhängung nach Anspruch 1, wobei die Wippe (11) ferner ein Tastenfeld (14) zum Schalten von Betriebsmodi der Kardanaufhängung umfasst.

10. Verfahren zum Steuern einer Kardanaufhängung nach einem der Ansprüche 1 bis 7,
wobei das Verfahren Folgendes umfasst:
Empfangen einer Aktionsanweisung und Erzeugen einer Steueranweisung durch eine Wippe (11);
Senden der Steueranweisung an eine Steueranordnung (2);
Erzeugen, basierend auf der Steueranweisung, einer Ausführungsanweisung zum Implementieren einer entsprechenden Aktion und Senden der Ausführungsanweisung an eine Ausführungsanordnung (3); und
Implementieren einer Richtungssteuerung für die optische Vorrichtung gemäß der Ausführungsanweisung durch die Ausführungsanordnung (3);
wobei das Verfahren zum Steuern der Kardanaufhängungsvorrichtung **dadurch gekennzeichnet ist, dass**
wenn der Wippengriff (12) in einer Position in die Linksrichtung (B1) oder die Rechtsrichtung (B2) gehalten wird und das zweite Potentiometer (132) für einen Zeitraum drückt, der länger als eine vorbestimmte Zeit ist, der Wippengriff (12) konfiguriert ist, um die Back-to-Middle-Steueranweisung über ein zweites Potentiometer (132), das in der Potentiometeranordnung (13) enthalten ist, an die Steueranordnung (2) zu senden, wobei das zweite Potentiometer (132) zum Steuern einer Drehaktion der optischen Vorrichtung über die Kardanaufhängung dient, oder
wobei, wenn der Wippengriff (12) in einer Position in die Aufwärtsrichtung (A1) oder die Abwärtsrichtung (A2) gehalten wird und das erste Potentiometer (131) für einen Zeitraum drückt, der Wippengriff (12) konfiguriert ist, um eine Back-to-Middle-Steueranweisung über das erste Potentiometer (131) an die Steueranordnung (2) zu senden;
wobei die Steueranordnung (2) konfiguriert ist, um nach dem Empfangen der Back-to-Middle-Steueranweisung eine Halteausführungsanweisung an die Ausführungsanordnung (12) zu erzeugen, um es der Kardanaufhängung zu ermöglichen, eine aktuelle Lage zu halten und den Wippengriff (12) in eine mittlere Position zurückzubringen.

11. Verfahren nach Anspruch 10, wobei die Wippe (11) ferner ein Tastenfeld (14) zum Schalten von Betriebsmodi der Kardanaufhängung umfasst.

## Revendications

1. Une nacelle pour commander un dispositif optique afin d'exécuter une action, comprenant un dispositif de commande (1), un ensemble de commande (2) connecté au dispositif de commande (1), et un ensemble d'exécution (3) connecté à l'ensemble de commande (2);
le dispositif de commande (1) comprend un joystick (11) pour recevoir une instruction d'action et générer une instruction de commande à envoyer à l'ensemble de commande (2), dans lequel le joystick (11) comprend une poignée de joystick (12) qui est mobile selon une direction vers le haut (A1), selon une direction vers le bas (A2), selon une direction vers la gauche (B1), et selon une direction vers la droite (B2);
l'ensemble de commande (2) est configuré pour générer, sur la base de l'instruction de commande envoyée par le dispositif de commande (1), une instruction d'exécution pour mettre en œuvre une action correspondante, et envoyer l'instruction d'exécution à l'ensemble d'exécution (3), dans lequel les instructions d'exécution de l'ensemble de commande (2) comprennent une instruction d'exécution de relèvement lorsque la poignée de joystick (12) est déplacée vers la direction vers le haut (A1), une instruction d'exécution d'abaissement lorsque la poignée de joystick (12) est déplacée vers la direction vers le bas (A2), une instruction d'exécution d'inclinaison vers la gauche lorsque la poignée de joystick (12) est déplacée vers la direction vers la gauche (B1), une instruction d'exécution d'inclinaison vers la droite lorsque la poignée de joystick (12) est déplacée vers la direction vers la droite (B2); et
l'ensemble d'exécution (3) est configuré pour mettre en œuvre une commande directionnelle pour le dispositif optique selon l'instruction d'exécution;
lequel la nacelle comprend un ensemble potentiométrique (13) connecté à la poignée de joystick (12), l'ensemble potentiométrique (13) comprenant un premier potentiomètre (131) pour commander une action de tangage du dispositif optique;
lequel la nacelle est **caractérisée en ce que**
dans le cas où la poignée de joystick (12) est maintenue dans une position vers la direction vers le haut (A1) ou la direction vers le bas (A2) et appuie sur le premier potentiomètre (131) pendant une période supérieure à une durée prédéterminée, la poignée de joystick
(12) est configurée pour envoyer une instruction de commande de retour au centre à l'ensemble de commande (2) via le premier potentiomètre (131),
lequel l'ensemble de commande (2) est configuré pour, après avoir reçu l'instruction de commande de retour au centre, générer une instruction d'exécution de maintien à l'ensemble d'exécution (12) pour permettre à la nacelle de maintenir une attitude actuelle et de ramener la poignée de joystick (12) à une position centrale.

2. La nacelle selon la revendication 1, dans laquelle l'ensemble d'exécution (3) comprend un premier élément de rotation (304), un second élément de rotation (306) connecté au premier élément de rotation (304), un élément de support (308) connecté au second élément de rotation (306), un premier moteur pour entraîner le second élément de rotation (306) à tourner par rapport au premier élément de rotation (304) permettant ainsi au dispositif optique qui est chargé sur l'élément de support (308) d'exécuter une action de tangage, et un second moteur pour entraîner l'élément de support à tourner par rapport au second élément de rotation (306) permettant ainsi au dispositif optique chargé sur l'élément de support d'exécuter une action d'inclinaison vers la gauche ou d'inclinaison vers la droite;
lequel l'ensemble d'exécution (3) est configuré pour, après avoir reçu l'instruction d'exécution d'inclinaison vers la gauche, commander le second moteur pour entraîner l'élément de support (308) à tourner dans le sens horaire par rapport au second élément de rotation (306), permettant ainsi au dispositif optique d'exécuter l'inclinaison vers la gauche,
ou
lequel l'ensemble d'exécution (3) est configuré pour, après avoir reçu l'instruction d'exécution d'inclinaison vers la droite, commander le second moteur pour entraîner l'élément de support (308) à tourner dans le sens antihoraire par rapport au second élément de rotation, permettant ainsi au dispositif optique d'exécuter l'inclinaison vers la droite.

3. La nacelle selon la revendication 1, dans laquelle la nacelle est configurée de sorte que lorsque la poignée de joystick (12) est déplacée selon la direction vers le haut (A1), la poignée de joystick (12) entre en contact avec le premier potentiomètre (131), et la poignée de joystick (12) est configurée pour envoyer une instruction de commande de relèvement à l'ensemble de commande (2) via le premier potentiomètre (131); l'ensemble de commande (2), après avoir reçu l'instruction de commande de relèvement, est configuré pour générer l'instruction d'exécution de relèvement permettant à la nacelle (100) d'exécuter l'action de relèvement, et pour envoyer l'instruction d'exécution de relèvement à l'ensemble d'exécution (3); l'ensemble d'exécution (3), après avoir reçu l'instruction d'exécution de relèvement, est configuré pour commander la nacelle (100) à exécuter l'action de relèvement.

4. La nacelle selon la revendication 1 ou 3, dans laquelle la nacelle est configurée de sorte que lorsque la poignée de joystick (12) est déplacée vers la direction vers la droite (B2), le joystick (11) est configuré pour envoyer une instruction de commande pour une action de rotation vers la droite à l'ensemble de commande (2) via le second potentiomètre (132).

5. La nacelle selon la revendication 1, dans laquelle le dispositif de commande comprend en outre un bras de support pour supporter le joystick.

6. La nacelle selon la revendication 1, dans laquelle le dispositif de commande comprend en outre un bras de support pour supporter le joystick (11) et un support situé à une extrémité du bras de support, ou dans laquelle le bras de support (15) est en forme de godet.

7. La nacelle selon la revendication 1, dans laquelle la poignée de joystick (12) est mobile selon une direction d'appui (C), et dans laquelle les instructions d'exécution de l'ensemble de commande (2) comprennent une instruction d'exécution de commutation pour permettre à la nacelle (100) d'effectuer une commutation de mode de fonctionnement, lorsque la poignée de joystick (12) est appuyée vers la direction d'appui (C).

8. Un dispositif de commande (1) pour commander une action d'une nacelle selon l'une quelconque des revendications précédentes, le dispositif de commande (1) étant configuré pour se connecter à l'ensemble de commande (2), le dispositif de commande (1) comprenant le joystick (11) pour recevoir une instruction de commande et envoyer l'instruction de commande à l'ensemble de commande (2), dans lequel le joystick (11) comprend la poignée de joystick (12) et l'ensemble potentiométrique (13) connecté à la poignée de joystick (12), l'ensemble potentiométrique (13) comprenant en outre un second potentiomètre (132) pour commander une action de rotation du dispositif optique via la nacelle;
le dispositif de commande (1) étant **caractérisé en ce que**
lorsque la poignée de joystick (12) est maintenue dans une position vers la direction vers la gauche (B1) ou la direction vers la droite (B2) et appuie sur le second potentiomètre (132) pendant une période supérieure à une durée prédéterminée,
la poignée de joystick (12) est configurée pour envoyer l'instruction de commande de retour au centre à l'ensemble de commande (2) via le second potentiomètre (132), ou
lequel lorsque la poignée de joystick (12) est maintenue dans une position vers la direction vers le haut (A1) ou la direction vers le bas (A2) et appuie sur le premier potentiomètre (131) pendant une période, la poignée de joystick (12) est configurée pour envoyer une instruction de commande de retour au centre à l'ensemble de commande (2) via le premier potentiomètre (131); lequel l'ensemble de commande (2) est configuré pour, après avoir reçu l'instruction de commande de retour au centre, générer une instruction d'exécution de maintien à l'ensemble d'exécution (12) pour permettre à la nacelle de maintenir une attitude actuelle et de ramener la poignée de joystick (12) à une position centrale.

9. Le dispositif de commande (1) selon la revendication 7 ou la nacelle selon la revendication 1,
dans lequel le joystick (11) comprend en outre un clavier (14) pour effectuer une commutation des modes de fonctionnement de la nacelle.

10. Un procédé pour commander une nacelle selon l'une quelconque des revendications 1 à 7, le procédé comprenant :
recevoir une instruction d'action et générer une instruction de commande par un joystick (11);
envoyer l'instruction de commande à un ensemble de commande (2);
générer, sur la base de l'instruction de commande, une instruction d'exécution pour mettre en œuvre une action correspondante, et envoyer l'instruction d'exécution à un ensemble d'exécution (3); et
mettre en œuvre une commande directionnelle pour le dispositif optique selon l'instruction d'exécution par l'ensemble d'exécution (3);
lequel le procédé pour commander le dispositif de nacelle est **caractérisé en ce que**
lorsque la poignée de joystick (12) est maintenue dans une position vers la direction vers la gauche (B1) ou la direction vers la droite (B2) et appuie sur le second potentiomètre (132) pendant une période supérieure à une durée prédéterminée, la poignée de joystick
(12) est configurée pour envoyer l'instruction de commande de retour au centre à l'ensemble de commande (2) via un second potentiomètre (132) compris dans l'ensemble potentiométrique (13), le second potentiomètre (132) étant destiné à commander une action de rotation du dispositif optique via la nacelle, ou
lequel lorsque la poignée de joystick (12) est maintenue dans une position vers la direction vers le haut (A1) ou la direction vers le bas (A2) et appuie sur le premier potentiomètre (131) pendant une période, la poignée de joystick (12) est configurée pour envoyer une
instruction de commande de retour au centre à l'ensemble de commande (2) via le premier potentiomètre (131);
lequel l'ensemble de commande (2) est configuré pour, après avoir reçu l'instruction de commande de retour au centre,
générer une instruction d'exécution de maintien à l'ensemble d'exécution (12) pour permettre à la nacelle de maintenir une attitude actuelle et de ramener la poignée de joystick (12) à une position centrale.

11. Le procédé selon la revendication 10, dans lequel le joystick (11) comprend en outre un clavier (14) pour effectuer une commutation des modes de fonctionnement de la nacelle.
